# EUROPÄISCHE PATENTANMELDUNG

(11) **EP 2 604 849 A1**
(43) Veröffentlichungstag der Anmeldung: **19.06.2013**
(21) Anmeldenummer: 11009798.7
(22) Anmeldetag: 13.12.2011
(51) Int. Cl.: F03B 13/18, F03B 13/22, F03B 15/00, F03B 17/06

(54) **Verfahren zum Betreiben einer in einem wellenbewegten Gewässer befindlichen Maschine**

(71) Anmelder: Robert Bosch GmbH, 70469 Stuttgart (DE)
(72) Erfinder: Hoffmann, Norbert, 21423 Winsen (DE); Scharmann, Nik, 74321 Bietigheim-Bissingen (DE); Hagemann, Benjamin, 70839 Gerlingen (DE); Behrendt, Jasper, 22761 Hamburg (DE); Houis, Nicolas, 74321 Bietigheim-Bissingen (DE); Poddey, Alexander, Dr, 71665 Vaihingen/Enz (DE); Thull, Daniel, 70599 Stuttgart (DE); Hilsch, Michael, 70192 Stuttgart (DE); Perschall, Markus, 63739 Aschaffenburg (DE)
(74) Vertreter: Thürer, Andreas

(57) **Zusammenfassung**

Die Erfindung betrifft ein Verfahren zum Betreiben einer in einem wellenbewegten Gewässer befindlichen Maschine, insbesondere eines Wellenenergiekonverters (20) zur Umwandlung von Energie aus einer Wellenbewegung eines Fluids in eine andere Energieform, wobei basierend auf zu einem ersten, früheren Zeitpunkt ermittelten Messgrößen eine die zu einem zweiten, späteren Zeitpunkt zu erwartende Wellenbewegung kennzeichnende Größe berechnet wird,

## Beschreibung

Die vorliegende Erfmdung betrifft ein Verfahren zum Betreiben einer in einem wellenbewegten Gewässer befindlichen Maschine, insbesondere eines Wellenenergiekonverters zur Umwandlung von Energie aus einer Wellenbewegung eines Fluids in eine andere Energieform, eine Recheneinheit zu dessen Durchführung sowie einen entsprechend betriebenen Wellenenergiekonverter.

### Stand der Technik

Wellenkraftwerke (Wellenenergiekonverter) nutzen die Energie von Meereswellen zur Gewinnung elektrischen Stromes. Neuere Konstruktionsansätze verwenden dabei rotierende Einheiten, die die Wellenbewegung in ein Drehmoment wandeln. An diesen kommen unter anderem hydrodynamische Auftriebskörper (d.h. Körper, die bei Umströmung einen Auftrieb erzeugen) als Kopplungskörper zum Einsatz, mittels derer aus der anströmenden Welle ein Auftriebsmoment erzeugt wird, das in eine Rotationsbewegung eines Läufers umsetzbar ist. Entsprechende Kopplungskörper sind beispielsweise an einem Kurbeltrieb angeordnet. Durch eine überlagerte Anströmung aus der Orbitalströmung der Wellenbewegung und der Eigendrehung der Kopplungskörper an dem Kurbeltrieb ergeben sich Auftriebskräfte an den Kopplungskörpern, wodurch ein Drehmoment in den Kurbeltrieb eingeleitet wird.

Der Auftrieb eines hydrodynamischen Auftriebskörpers kann über dessen Anstellwinkel zum anströmenden Medium, beispielsweise Luft oder Wasser, verändert werden. Insbesondere für derartige rotierende Wellenkraftwerke mit hydrodynamischen Auftriebskörpern ist eine zuverlässige Regelung wichtig, da eine Desynchronisation des Rotors von der Orbitalströmung durch einen Strömungsabriss zu einer vollständigen Entkopplung von der Welle führen kann.

Insbesondere aufgrund der multichromatischen Wellenzustände von Meereswellen ist es notwendig, eine entsprechende Anlage derart zu steuern und/oder zu regeln, dass die Kopplungskörper stets optimal angeströmt und möglichst nahe dem Wandlungsoptimum betrieben werden. Hierdurch kann eine maximale Energieausbeute erzielt werden. Stellgrößen sind hierbei insbesondere das Generatormoment und die Verstellung des Anstellwinkels der Kopplungskörper. Hieraus ergeben sich entsprechende Anströmwinkel an den Kopplungskörpern und ein Phasenwinkel zwischen Anlagendrehung und Wellenorbitalströmung.

In der US 7,686,583 B2 wird vorgeschlagen, einen Anströmwinkel eines einen Kopplungskörper anströmenden Fluids auf Grundlage eines gemessenen Auftriebs in Verbindung mit der Strömungsgeschwindigkeit zu bestimmen. Hierzu sind unterschiedliche Messmittel, darunter Drucksensoren, vorgesehen. Auf dieser Grundlage kann dann eine Regelung vorgenommen werden, die beispielsweise eine Verstellung oder Torsion der Kopplungskörper zur Anpassung an eine schräge Anströmung oder eine entsprechende Neuausrichtung der Gesamtanlage umfasst. Insbesondere lokale Unterschiede an einem Kopplungskörper lassen sich durch das dort offenbarte Verfahren jedoch nicht erkennen. Das Verfahren erlaubt ferner keine Aussagen über einen bevorstehenden oder bereits eingetretenen Strömungsabriss.

Es besteht daher weiterhin der Bedarf nach verbesserten Möglichkeiten zum Betrieb eines Wellenenergiekonverters.

### Offenbarung der Erfindung

Erfindungsgemäß werden ein Verfahren zum Betreiben einer in einem wellenbewegten Gewässer befindlichen Maschine, insbesondere eines Wellenenergiekonverters zur Umwandlung von Energie aus einer Wellenbewegung eines Fluids in eine andere Energieform, eine Recheneinheit zu dessen Durchführung sowie ein entsprechend betriebener Wellenenergiekonverter mit den Merkmalen der unabhängigen Patentansprüche vorgeschlagen. Vorteilhafte Ausgestaltungen sind Gegenstand der Unteransprüche sowie der nachfolgenden Beschreibung.

### Vorteile der Erfindung

Im Rahmen der Erfindung wird auf Grundlage von Messgrößen eines ersten, früheren Zeitpunkts eine Vorhersage einer Wellenbewegung zu einem zweiten, späteren Zeitpunkt gemacht, wodurch der Betrieb der Maschine deutlich verbessert werden kann. insbesondere kann eine Vorsteuerung erfolgen, so dass auftretende Regelabweichungen reduziert werden. In der Folge können die Regeleingriffe reduziert werden, die Regelung wird robuster. Der Betrieb wird weniger reaktiv.

Die Erfindung schlägt ein Verfahren sowie ein Messsystem vor, mit Hilfe dessen ein dreidimensionales Geschwindigkeitspotential bestimmt werden kann, aus dem dann u.a. ein Geschwindigkeitsfeld abgeleitet werden kann. Damit sind die aktuellen Strömungsbedingungen bekannt, was zu einer besonders effizienten Vorsteuerung der Maschine genutzt werden kann. Insbesondere wird ein Messverfahren für eine kostengünstige und robuste 3D-Datenerfassung vorgeschlagen. Es werden verschiedene Prädiktionsmöglichkeiten angegeben, mit denen die erhobenen Messdaten zeitlich und räumlich extrapoliert werden können.

Gemäß einem Aspekt der Erfindung wird ein Wellenenergiekonverter betrieben. Die Erfindung stellt ein Verfahren vor, das eine Vorsteuerung der Stellgrößen (insbesondere Generatormoment und/oder Anstellwinkel (Pitchwinkel) der Kopplungskörper) ermöglicht. Der Betrieb umfasst vorzugsweise eine Regelung, wobei die Regelgröße ein Phasenwinkel zwischen einer Rotationsbewegung eines Rotors des Wellenenergiekonverters und einer Orbitalströmung der Wellenbewegung sein kann. Hinsichtlich näherer Details zu Eingriffs- bzw. Steuerungsmöglichkeiten für die Energiewandlung wird auf die nachveröffentlichte DE 10 2011 105 177 verwiesen, deren Offenbarung zum Bestandteil der vorliegenden Erfmdung gemacht wird. In der Folge können die Regeleingriffe reduziert werden, die Regelung wird robuster. Der Betrieb des Wellenenergiekonverters wird verbessert, da weniger auf bereits eingetretene Veränderungen reagiert werden muss (was zu einer Verschlechterung der Energiegewinnung führt), und statt dessen im Wege einer Vorsteuerung der Wellenenergiekonverter bereits auf zu erwartende Veränderungen eingestellt wird (was eine Verschlechterung der Energiegewinnung reduziert oder ganz verhindert). Die Wandlungseffizienz wird erhöht. Dies gilt insbesondere für multichromatische Wellenzustände, die besonders hohe Anforderungen an die Steuerung/Regelung von Wellenenergiekonvertern stellen. Weiterhin ergeben sich besonders vorteilhafte Möglichkeiten, wenn es um Schutzmaßnahmen geht.

Insbesondere für Wellenenergiekonverter, die das hydrodynamische Auftriebsprinzip nutzen, ist eine sehr gute Kenntnis des Strömungsfelds entscheidend, da bei falscher Steuerung/Regelung eine Entkopplung der Maschine von der lokalen Anströmung und damit der Wellenbewegung auftreten kann. In diesem Fall würde die Effizienz der Anlage deutlich sinken. Zudem würde die mechanische Belastung der Maschine deutlich steigen. Im Rahmen der Erfindung wird das durch die Wellen induzierte Strömungsfeld an dem Wellenenergiekonverter berechnet, um eine Reglung der Maschine zu ermöglichen.

Darüber hinaus können der Orbitalströmung überlagerte Strömung mit dem vorgestellten System erfasst und in die Berechnung integriert werden. Da diese Strömung der Orbitalströmung der Wellenbewegung überlagert ist, ist eine Einbeziehung in die Berechnung vorteilhaft, um die Wandlungseffizienz zu steigern.

Eine bevorzugte vorhersagbare Größe, die die zu dem zweiten, späteren Zeitpunkt zu erwartende Wellenbewegung kennzeichnet, ist ein Geschwindigkeitsfeld bzw. Strömungsfeld oder ein Geschwindigkeitspotential. Dabei nutzt die Erfindung vorteilhaft die Eigenschaft von Meereswellen, dass diese im Rahmen der erfmderischen Anwendung sehr gut als Geschwindigkeitspotential modelliert werden können, da viskose Effekte im Rahmen der beschriebenen Anwendung der Erfindung von geringem Einfluss sind. Ein Geschwindigkeitsfeld ist in ein Vektorfeld, das jedem Ort im Raum einen Geschwindigkeitsvektor zuordnet.

Die Erfmdung kann gemäß einem anderen Aspekt auch in Bereichen eingesetzt werden, in denen eine Vorhersage der Wellenbewegung Vorteile für den Betrieb bzw. die Sicherheit einer meerestechnischen Konstruktion bietet. Der Betrieb kann bspw. das Bringen in eine Ruheposition (z.B. Fahnenstellung bei Kopplungskörpern von Wellenenergiekonvertern) umfassen. Weiterhin können Offshore-Operationen effizienter durchgeführt werden (z.B. das Absetzen einer Last von einem bewegten Schiff auf eine Ölplattform oder auf den Meeresgrund). Insbesondere kann die Erfindung jedoch in Wellenkraftwerken eingesetzt werden, um die Wandlungseffizienz zu erhöhen. In diesem Zusammenhang kann die Erfindung besonders vorteilhaft zur konzertierten Steuerung einer Vielzahl von Kraftwerken (Parks) genutzt werden. Das gilt insbesondere für den Fall, dass die Absorptions- und/oder Abstrahlcharakteristik der einzelnen Kraftwerke bekannt und durch geeignete Modelle beschreibbar ist.

Vorzugsweise wird ein Ausgangsgeschwindigkeitsfeld oder Ausgangsgeschwindigkeitspotential an einem ersten Ort zu einem ersten, früheren Zeitpunkt basierend auf Messwerten bestimmt und ausgehend von dem Ausgangsgeschwindigkeitsfeld oder Ausgangsgeschwindigkeitspotential ein Ergebnisgeschwindigkeitsfeld oder Ergebnisgeschwindigkeitspotential an einem zweiten Ort zu einem zweiten, späteren Zeitpunkt bestimmt. Der zweite Ort ist zweckmäßigerweise der Ort des jeweiligen Wellenenergiekonverters, der erste Ort kann derselbe Ort sein, befindet sich jedoch vorzugsweise auf der der einlaufenden Welle zugewandten Seite in einem gewissen Abstand vor dem Wellenenergiekonverter bzw. dem Park.

In der Arbeit "Direct Simulation and Deterministic Prediction of Large-scale Nonlinear Ocean Wavefield" von Guangyu Wu, Department of Ocean Engineering, MIT, (http://hdl.handle.net/1721.1/33450) wird beispielsweise im Zusammenhang mit Schiffsverkehr eine Methode beschrieben, mit der basierend auf Messgrößen ein Ausgangswellenfeld bestimmt wird und das Ausgangswellenfeld zeitlich weiterentwickelt wird, um ein zu erwartendes Wellenfeld vorherzusagen. Die betrachteten Größenordnungen umfassen dort einige 100 km. Die Bestimmung des Ausgangswellenfeldes bedient sich Stokes-Gleichungen (vgl. z.B. Schwartz, L.W., 1974, Computer extension and analytic continuation of Stokes' expansion for gravity waves, J. Fluid Mech., Vol. 62, 553-578) niedriger Ordnung (bis zur 2.) für Wellen mit geringer Höhe sowie zusätzlich einer nichtlinearen Spektralanalyse höherer Ordnung (HOS; vgl. z.B. Dommermuth, D.G. & Yue, D.K.P., 1987, A high-order spectral method for the study of nonlinear gravity waves. J. of Fluid Mech. 184) für Wellen mit höherer Höhe. Die zeitliche Entwicklung bedient sich ebenfalls einer HOS-Methode.

Die HOS-Methode ist in der Lage, die zeitlich Entwicklung von z.B. Geschwindigkeitspotentialen mit hoher Genauigkeit effizient zu berechnen. Um eine zeitliche Entwicklung vornehmen zu können, ist es nötig, das aktuell bestehende Geschwindigkeitspotential (Ausgangspotential) zu kennen, um dieses als Anfangsbedingungen in der HOS nutzen zu können. In der Arbeit von Wu wird erstmals eine systematische Generierung dieser Anfangsbedingungen aufgeführt. Die Generierung beruht auf den Messdaten eines Sensorsystems. Durch eine geeignete Korrelation der Sensoren ist es möglich, das Ausgangspotential zu bestimmen.

Im Rahmen der Erfindung wurde erkannt, dass sich diese Methode überraschenderweise auch auf viel kleineren Skalen einsetzen lässt (die für Wellenenergiekonverter relevanten Größenordnungen umfassen nur bis zu wenige 100 m) und sich daher sehr gut für die Ansteuerung bzw. den Betrieb von Wellenenergiekonvertern eignet. Im Rahmen der Erfindung werden nun vorzugsweise basierend auf der dort beschriebenen Methode sowohl das Ausgangsgeschwindigkeitspotential als auch das Ergebnisgeschwindigkeitspotential bestimmt. Dieses vorherbestimmte Ergebnisgeschwindigkeitspotential kann insbesondere für eine Vorsteuerung des Wellenenergiekonverters verwendet werden, bspw. für die Generatormoment- und/oder Pitchregelung.

In weiter vorteilhafter Ausgestaltung wird die Rückwirkung eines Wellenenergiekonverters auf das Geschwindigkeitspotential bestimmt, um z.B. Wellenenergiekonverterparks effizient nutzen zu können. Auch hierzu kann die beschriebene HOS-Methode verwendet werden.

Eine erfindungsgemäße Recheneinheit, z.B. ein Steuergerät eines oder mehrerer Wellenenergiekonverters, ist, insbesondere programmtechnisch, dazu eingerichtet, ein erfindungsgemäßes Verfahren durchzuführen.

Auch die Implementierung der Erfmdung in Form von Software ist vorteilhaft, da dies besonders geringe Kosten ermöglicht, insbesondere wenn eine ausführende Recheneinheit noch für weitere Aufgaben genutzt wird und daher ohnehin vorhanden ist. Geeignete Datenträger zur Bereitstellung des Computerprogramms sind insbesondere Disketten, Festplatten, Flash-Speicher, EEPROMs, CD-ROMs, DVDs u.a.m. Auch ein Download eines Programms über Computernetze (Internet, Intranet usw.) ist möglich.

Weitere Vorteile und Ausgestaltungen der Erfmdung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfmdung zu verlassen.

Die Erfindung ist anhand von Ausführungsbeispielen in der Zeichnung schematisch dargestellt und wird im Folgenden unter Bezugnahme auf die Zeichnung ausführlich beschrieben.

### Figurenbeschreibung

- Figur 1: zeigt einen Wellenenergiekonverter mit einem Rotor mit zwei Kopplungskörpern in einer Seitenansicht und veranschaulicht den Anstellwinkel γ und den Phasenwinkel Δ zwischen Rotor und Orbitalströmung.
- Figur 2: zeigt resultierende Anströmwinkel a₁ und a₂ und resultierende Kräfte an den Kopplungskörpern des Rotors aus Figur 1.
- Figur 3: veranschaulicht in einer Seitenansicht eine mögliche Anordnung von Sensoren an und um einen Wellenenergiekonverter zur Wandlung von Energie aus einer Wellenbewegung.

### Detaillierte Beschreibung der Zeichnungen

In den Figuren sind gleiche oder gleich wirkende Elemente mit identischen Bezugszeichen angegeben. Auf eine wiederholte Erläuterung wird der Übersichtlichkeit halber verzichtet.

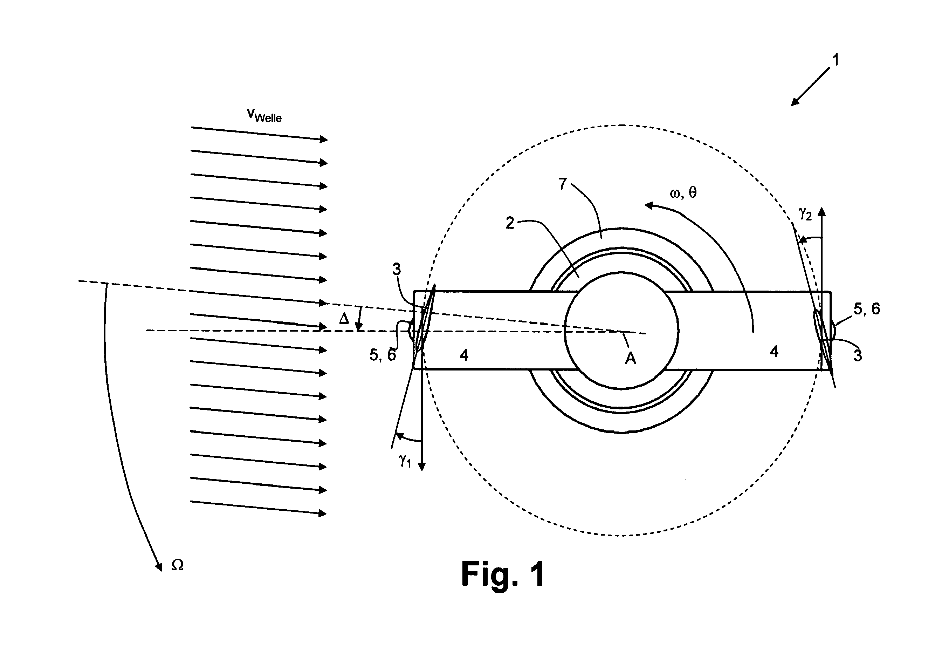

In Figur 1 ist ein Wellenenergiekonverter 1, wie er der vorliegenden Erfindung zugrunde liegen kann, mit einem Gehäuse 7 und einem daran drehbar gelagerten Rotor 2,3,4 mit einer Rotorbasis 2 und zwei jeweils über Hebelarme 4 drehfest an der Rotorbasis 2 befestigten Kopplungskörpern 3 dargestellt. Der Rotor 2,3,4 sei unterhalb der Wasseroberfläche eines welligen Gewässers - beispielsweise eines Ozeans - angeordnet. Hierbei sollen vorzugsweise Tiefwasserbedingungen vorliegen, bei denen die Orbitalbahnen der Wassermoleküle weitgehend kreisförmig verlaufen. Seine Rotationsachse A sei weitgehend horizontal und weitgehend senkrecht zur aktuellen Ausbreitungsrichtung der Wellen des welligen Gewässers orientiert. Die Kopplungskörper 3 sind im gezeigten Beispiel als hydrodynamische Auftriebskörper ausgeführt. Vorzugsweise sind die rotierenden Komponenten des Wellenenergiekonverters mit einem weitgehend neutralen Auftrieb versehen, um eine Vorzugsposition zu vermeiden. Dies gilt insbesondere für gegenüber der Rotationsachse unsymmetrische Bauteile des Rotors, die keinen punktsymmetrisch angeordnetes "Partnerteil" besitzen.

Die Kopplungskörper 3 sind in einem Winkel von etwa 180° zueinander angeordnet. Vorzugsweise sind die Kopplungskörper in der Nähe ihres Druckpunktes gehaltert, um im Betrieb auftretende Rotationsmomente auf die Kopplungskörper und damit die Anforderungen an die Halterung und/oder die Verstelleinrichtungen zu reduzieren.

Der radiale Abstand zwischen Aufhängungspunkt eines Kopplungskörpers und Rotorachse beträgt 1 m bis 50 m, vorzugsweise 2 m bis 40m, besonders bevorzugt 4 m bis 30 m und ganz besonders bevorzugt 5 m bis 20 m.

Zusätzlich dargestellt sind zwei Verstelleinrichtungen 5 zur Verstellung der Anstellwinkel γ₁, und γ₂ der Kopplungskörper 3 zwischen Flügelsehne und Tangente. Die beiden Anstellwinkel γ₁ und γ₂ sind vorzugsweise entgegengerichtet orientiert und weisen vorzugsweise Werte von -20° bis +20° auf. Insbesondere beim Anfahren der Maschine können jedoch auch größere Anstellwinkel vorgesehen sein. Vorzugweise können die Anstellwinkel γ₁ und γ₂ unabhängig voneinander verstellt werden. Bei den Verstelleinrichtungen kann es sich beispielsweise um elektromotorische Verstelleinrichtungen - vorzugsweise mit Schrittmotoren - und/oder um hydraulische und/oder pneumatische Komponenten handeln.

Den beiden Verstelleinrichtungen 5 kann zudem jeweils eine Sensorik 6 zur Bestimmung der aktuellen Anstellwinkel γ₁ und γ₂ zugeordnet sein. Eine weitere, nicht dargestellte Sensorik kann den Rotationswinkel der Rotorbasis 2 gegenüber dem Gehäuse 7 bestimmen.

Der Wellenenergiekonverter 1 wird von der Orbitalströmung mit einer Anströmungsgeschwindigkeit v_{Welle} angeströmt. Dabei handelt es sich bei der Anströmung um die Orbitalströmung von Meereswellen, deren Richtung sich kontinuierlich ändert. Im dargestellten Fall ist die Drehung der Orbitalströmung entgegen dem Uhrzeigersinn orientiert, die dazugehörige Welle breitet sich also von rechts nach links aus. Im monochromatischen Fall ändert sich die Anströmungsrichtung dabei mit der Winkelgeschwindigkeit O = 2 p f = const., wobei f die Frequenz der monochromatischen Welle darstellt. In multichromatischen Wellen unterliegt O dagegen einer zeitlichen Änderung, O =*f*(t), da die Frequenz f eine Funktion der Zeit ist, f=*f*(t). Es ist vorgesehen, dass der Rotor 2,3,4 synchron zur Orbitalströmung der Wellenbewegung mit einer Winkelgeschwindigkeit ω rotiert, wobei der Begriff der Synchronizität im zeitlichen Mittel zu verstehen ist. Hierbei gilt beispielsweise Ω≈ω. Ein Wert oder ein Wertebereich für eine Winkelgeschwindigkeit ω des Rotors wird also auf Grundlage einer Winkelgeschwindigkeit O der Orbitalströmung vorgegeben oder an diese angepasst. Hierbei kann eine konstante Regelung oder eine kurzzeitige bzw. kurzfristige Anpassung erfolgen.

Durch die Einwirkung der Strömung mit der Anströmungsgeschwindigkeit v_{Welle} auf die Kopplungskörper wird, wie unten näher erläutert, ein auf den Rotor 2,3,4 wirkendes erstes Drehmoment erzeugt. Vorgesehen ist darüber hinaus, dass auf den Rotor 2,3,4 ein vorzugsweise veränderbares zweites Drehmoment in Form eines Widerstands, also eines Bremsmoments, oder eines Beschleunigungsmoments aufbringbar ist. Mittel zur Erzeugung des zweiten Drehmoments sind zwischen der Rotorbasis 2 und dem Gehäuse 7 angeordnet. Vorzugsweise ist dabei vorgesehen, dass es sich bei dem Gehäuse 7 den Ständer eines direktgetriebenen Generators und bei der Rotorbasis 2 um den Läufer dieses direktgetriebenen Generators handelt, dessen Lagerung, Wicklungen etc. nicht dargestellt sind; hier wird das zweite Drehmoment durch das Generatormoment bestimmt. Alternativ dazu können jedoch auch andere Triebstrangvarianten vorgesehen sein, bei denen die Mittel zur Erzeugung des zweiten Moments neben einem Generator auch noch ein Getriebe und/oder hydraulische Komponenten, wie zum Beispiel Pumpen, umfassen. Die Mittel zur Erzeugung des zweiten Moments können zusätzlich oder auch ausschließlich eine geeignete Bremse umfassen.

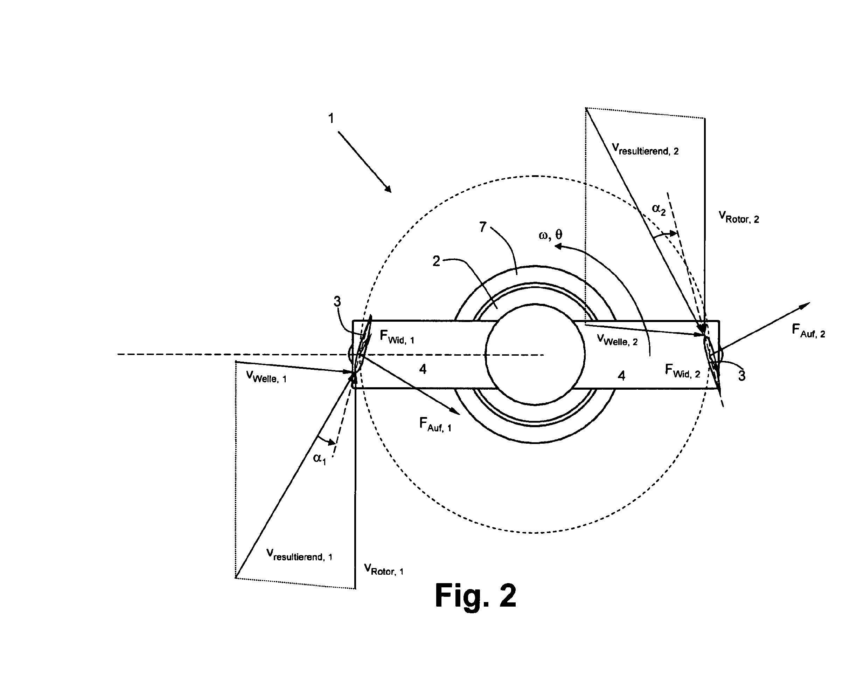

Zwischen der Rotororientierung, die durch eine untere gestrichelte Linie veranschaulicht ist, die durch die Rotorachse und die Mitte der beiden Verstelleinrichtungen 5 verläuft, und der Richtung der Orbitalströmung, die die durch eine obere gestrichelte Linie veranschaulicht ist, die durch einen der Geschwindigkeitspfeile v_{Welle} verläuft, besteht ein Phasenwinkel Δ, dessen Betrag durch die Einstellung des ersten und/oder des zweiten Drehmoments beeinflusst werden kann. Dabei erscheint ein Phasenwinkel von -45° bis 45°, vorzugsweise von -25° bis 25° und besonders bevorzugt von -15° bis 15° zur Erzeugung des ersten Drehmoments als besonders vorteilhaft, da hier bei die Orbitalströmung v_{Welle} und die Anströmung aufgrund der Eigenrotation v_{Rotor} (siehe Figur 2) weitgehend senkrecht zueinander orientiert sind, was zu einer Maximierung des Rotormoments führt. Unter Einhaltung der geforderten Synchronität gilt Δ ≈ const., wobei auch ein Pendeln um einen Mittelwert von Δ als synchron verstanden wird. Die Darstellung der Kopplungskörper in der Figur 1 und in den weiteren Figuren erfolgt nur beispielhaft zur Definition der unterschiedlichen Maschinenparameter. Vorzugsweise werden im Betrieb die Anstellwinkel der beiden Kopplungskörper entgegengesetzt zur Darstellung ausgeführt. Der in Figur 1 linke Kopplungskörper wäre dann nach innen verstellt und der in Figur 1 rechte Kopplungskörper nach außen. Dabei kann entgegen dieser schematischen Darstellung mit ungekrümmten symmetrischen Profilen insbesondere auch der Einsatz von anderen Profilgeometrien vorgesehen sein, die zudem auch noch in Bezug auf die kreisförmige Bahnlinie angepasst und/oder transformiert sein können.

Im Rahmen der Erfindung können auf Grundlage des vorherbestimmten Ergebnis-Geschwindigkeitspotentials insbesondere v_{Welle} und O(t) vorherbestimmt werden, so dass eine Vorsteuerung des ersten und/oder zweiten Drehmoments entsprechend durchgeführt werden kann. Dabei kann es bei kleinen Rotordurchmessern ausreichen, den Strömungsvektor im Rotormittelpunkt zu bestimmen. Bei größeren Rotordurchmessern ist hingegen die Kenntnis des lokalen Strömungsvektors an den Kopplungskörpern vorteilhaft. Das erste Drehmoment wird im Wesentlichen über die die Anstellwinkel γ₁ und γ₂ sowie über den Phasenwinkel Δ zwischen Rotation ω und Orbitalströmung O und die resultierende Anströmgeschwindigkeit beeinflusst, das zweite Drehmoment über das vom Generator abgegriffene Moment, welches bspw. über eine Vorgabe des Erregerstroms des Läufers beeinflusst werden kann.

In Figur 2 sind die sich ergebenden Anströmungsverhältnisse und die sich einstellenden Kräfte an den Kopplungskörpern, die zu einem Rotordrehmoment führen, schematisch dargestellt. Dabei wird vereinfachend davon ausgegangen, dass die Strömung über den gesamten Rotorquerschnitt gleichförmig ausgeprägt ist und einen gleichen Betrag und eine gleiche Richtung aufweist. Insbesondere für Rotoren mit großen Radialerstreckungen kann es jedoch gerade bei der dargestellten horizontalen Ausrichtung der Hebelarme 4 dazu kommen, dass sich die verschiedenen Kopplungskörper 3 des Rotors 2,3,4 relativ zur Welle an unterschiedlichen Positionen befinden, was zu einer lokal verschiedenen Anströmungsrichtung führt. Dies kann jedoch beispielsweise mit Hilfe einer individuellen Einstellung des jeweiligen Anstellwinkels γ ausgeglichen werden.

An beiden Kopplungskörpern sind in Figur 2 die lokalen Anströmungen durch die Orbitalströmung (v_{Welle,i}) und durch die Eigenrotation (v_{Rotor,i}) die als Vektorsumme aus diesen beiden Anströmungen resultierende Anströmgeschwindigkeit (v_{resultierend,i}) sowie die sich ergebenden Anströmwinkel a₁ und a₂ dargestellt. Abgeleitet sind darüber hinaus die sich ergebenden Auftriebs- und Widerstandskräfte F_{Auf,i} und F_{Wid,i} an beiden Kopplungskörpern, die sowohl vom Betrag der Anströmgeschwindigkeit als auch von den Anströmwinkeln a₁ und a₂ und damit auch von den Anstellwinkeln γ₁ und γ₂ abhängig sind und senkrecht bzw. parallel zur Richtung von v_{resultierend,i} orientiert sind.

Für den dargestellten Fall ergibt sich durch die beiden Auftriebskräfte F_{Auf,i} ein Rotordrehmoment entgegengesetzt dem Uhrzeigersinn und durch die beiden Widerstandskräfte F_{Wid,i} ein betragsmäßig kleineres Rotordrehmoment in entgegengesetzter Richtung (also im Uhrzeigersinn). Die Summe aus beiden Rotordrehmomenten führt zu einer Rotation des Rotors 2,3,4, deren Geschwindigkeit durch das verstellbare zweite Drehmoment eingestellt werden kann.

Wird eine Synchronität mit Δ ≈ const. erreicht, so ist aus Figur 2 unmittelbar ersichtlich, dass sich für monochromatische Fälle, in denen der Betrag der Strömung v_{Welle,i} und die Winkelgeschwindigkeit O konstant bleiben, die Anströmbedingungen der beiden Kopplungskörper 3 über die Drehung des Rotors nicht ändern. Dies bedeutet, dass mit konstanten Anstellwinkeln γ ein weitgehend konstantes Rotor-Drehmoment erzeugt wird, das mit einem konstanten zweiten Drehmoment eines entsprechenden Generators abgegriffen werden kann.Im Fall multichromatischer Wellen ergeben sich hingegen Änderungen in der Winkelgeschwindigkeit O und im Betrag v_{Welle,} die durch Anpassung der Anstellwinkel und/oder des zweiten Drehmoments berücksichtigt werden können. Dies gelingt besonders vorteilhaft durch eine Vorsteuerung basierend auf der vorliegenden Erfindung.

Aus den an den Kopplungskörpern angreifenden Kräften ergibt sich neben einem Rotor-Drehmoment auch eine resultierende Rotorkraft durch vektorielle Addition von F_{Auf,1}, F_{Wid,1}, F_{Auf,2} und F_{Wid,2}. Diese wirkt als Lagerkraft auf das Gehäuse und muss entsprechend abgestützt werden, wenn eine Verschiebung des Gehäuses unerwünscht ist. Während das Rotor-Drehmoment bei Annahme gleicher Anströmbedingungen (v_{Welle,i}, Δ, Ω, ω, α₁, a₂,γ₁, γ₂ = const.) konstant bleibt, gilt dies für die resultierende Rotorkraft nur betragsmäßig. Aufgrund der sich ständig ändernden Strömungsrichtung der Orbitalströmung und der synchronen Rotordrehung ändert sich auch die Richtung der Rotorkraft entsprechend. Im Falle multichromatischer Wellen ändert sich neben der Richtung auch der Betrag der Rotorkraft kontinuierlich.

Neben einer Beeinflussung des Rotor-Drehmoment durch eine Verstellung der Anstellwinkel γ und/oder eine Verstellung des Phasenwinkels Δ kann auch der Betrag und Richtung dieser Rotorkraft durch eine Änderung der Anstellwinkel γ (wodurch sich die Anströmwinkel a ändern), durch eine Änderung der Rotorwinkelgeschwindigkeit ω und/oder des Phasenwinkels Δ - beispielsweise durch Änderung des als zweiten Moments aufgebrachten Generatormoments (wodurch sich v_{Rotor} ändert) und/oder durch eine Kombination dieser Änderungen beeinflusst werden. Dabei wird vorzugsweise die in der Einleitung beschriebene Synchronität eingehalten.

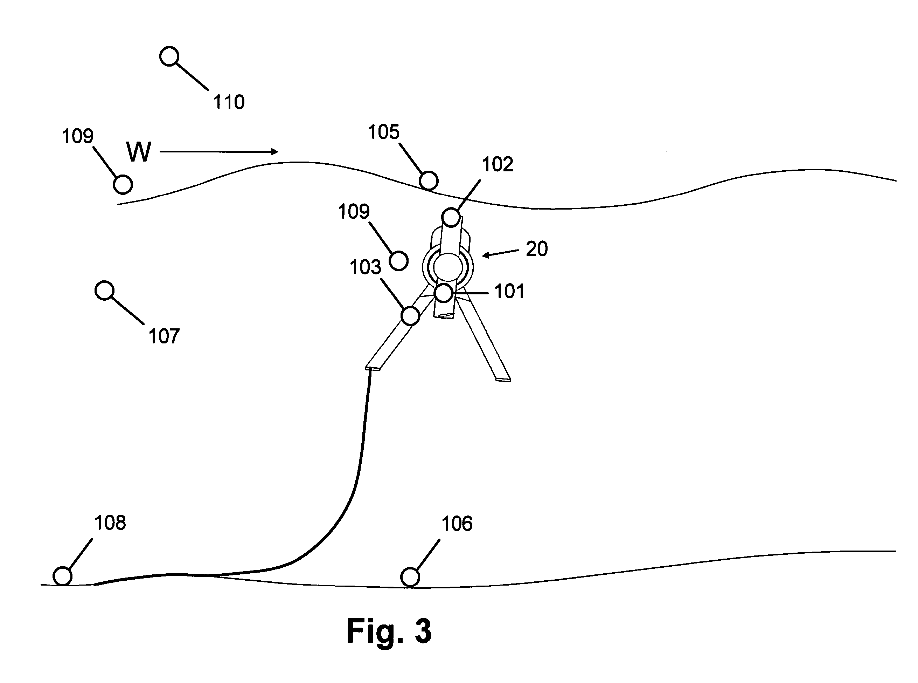

Figur 3 zeigt unterschiedliche bevorzugte Sensorpositionen zur Anbringung von Sensoren zur Bestimmung der Strömungsverhältnisse an einem Wellenenergiekonverter 20 und besonders bevorzugt zur Bestimmung der lokalen Anströmungsverhältnisse an den Kopplungskörpern eines Wellenenergiekonverters. Darüber hinaus lässt sich mit auf dem Wellenenergiekonverter 1 angebrachten Sensoren auch dessen Bewegungsverhalten bestimmen. Eine Wellenausbreitungsrichtung ist mit W bezeichnet. Der Wellenenergiekonverter 20 ist mit einem Rahmen zur Lagestabilisierung ausgerüstet, der Rahmen wiederum mit einem Mooring zur Erreichung von Standorttreue und zusammen mit einem hydrostatischen Auftriebssystem zur Abstützung des zweiten Drehmoments ausgestattet.

Zur gezielten Beeinflussung der Rotorkräfte ist die Kenntnis der Anströmungsverhältnisse an den Kopplungskörpern, dabei insbesondere die lokale Strömungsgeschwindigkeit und -richtung, vorteilhaft. Hierzu können Sensoren auf dem Rotor (Position 101, 20) und/oder auf den Kopplungskörpern (Position 102) und/oder auf dem Rahmen (Position 103) und/oder unter der Wasseroberfläche schwimmend in Maschinennähe (Position 104) und/oder auf der Wasseroberfläche in Maschinennähe (Position 105) und/oder auf dem Meeresgrund unterhalb der Maschine (Position 106) und/oder unter der Wasseroberfläche schwimmend der Maschine (oder einem Park aus mehreren Maschinen) vorgelagert (Position 107) und/oder auf dem Meeresgrund der Maschine (oder einem Park aus mehreren Maschinen) vorgelagert (Position 108) und/oder schwimmend der Maschine (oder einem Park aus mehreren Maschinen) vorgelagert (Position 109) und/oder oberhalb der Wasseroberfläche (Position 110) - zum Beispiel in einem Satelliten - angeordnet sein. Zusätzliche Sensoren 105' bis 109' können, bezogen auf die Wellenausbreitungsrichtung, leeseitig angeordnet sein. Derartige leeseitige Sensoren ermöglichen die Bestimmung einer Interaktion des Wellenenergiekonverters mit den eingegangen Wellen. Auf Grund dieser Kenntnis kann das Ergebnis der Interaktion überprüft und ggf. die Interaktion zielgerichtet über eine Maschinensteuerung verändert werden.

Hierbei können Sensoren und entsprechende Kombinationen, unter anderem aus folgenden Klassen, zum Einsatz kommen:
● Drucksensoren (zur Differenz- und/oder Absolutdruckbestimmung) zur Bestimmung von hydrostatischen (Wellenhöhe) und/oder hydrodynamischen (Anströmung) Drücken; insbesondere bei unterschiedlicher geometrischer Ausrichtung zur Erfassung von verschiedenen vorzugsweise orthogonalen Messrichtungen lässt sich ein vollständiges Messbild erfassen. Dies wird durch die Überlagerung mehrerer Messpunkte von einem punktuellen in ein 3D-System überführt.
● Ultraschallsensoren zur Bestimmung von Strömungsgeschwindigkeiten (z.B. über im Fluid mitgeführte Partikel), vorteilhafterweise in mehreren Dimensionen.
● Lasersensoren zur Bestimmung von Strömungsgeschwindigkeiten und/oder einer Geometrie einer Wasseroberfläche, um Ausbreitungsrichtung und daraus die Wellenhöhe und abgeleitet die Ausbreitungsgeschwindigkeit zu bestimmen.
● Radarsensoren zur Bestimmung der Oberflächengeometrie
● Beschleunigungssensoren zur Bestimmung von Strömungsverhältnissen und/oder von Bewegungen des Gesamtsystems und/oder des Rotors und/oder der Oberflächengeschwindigkeiten des Gewässers und/oder zur Bestimmung der Ausrichtung eines Körpers - insbesondere des Rotors - über die Detektion des Erdschwerefeldes; (z.B. Beschleunigungssensoren, die in Schwebekörpern mit neutralem Auftrieb, wie beispielsweise Kugeln, mitgeführt werden und über die aktuellen Beschleunigungswerte Strömungsgeschwindigkeit und Richtung erfassen können; die Übertragung der Messsignale kann z.B. per Funk erfolgen. Neben einem "frei schwimmenden" Körper kann dieser auch an einem Gelenk aufgehängt sein; auch hier können die Bewegungen mit Beschleunigungssensoren ausgewertet werden, wobei die Bewegungen auf 2D beschränkt sind, es sei denn, die Verbindungsstange ist teleskopisch ausgeführt).
● Inertialsensoren zur Messung unterschiedlicher translatorischer und/oder rotatorischer Beschleunigungskräfte.
● Massenstrommesser/Durchflusssensoren und Hitzdrahtanemometer zur Bestimmung einer Strömungsgeschwindigkeit.
● Biegewandler zur Bestimmung einer Strömungsgeschwindigkeit (über den Verformungsgrad).
● Dehnungssensoren zur Bestimmung der Verformung der Kopplungskörper.
● Anemometer zur Bestimmung einer Strömungsgeschwindigkeit.
● Winkelsensoren (absolut oder inkrementell), Tachometer zur Bestimmung von Anstellwinkel der Kopplungskörper und/oder des Drehwinkels des Rotors.
● Drehmomentsensoren zur Bestimmung der Verstell- und/oder Haltekräfte des Kopplungskörperverstellsystems.
● Kraftsensoren zur Bestimmung der Rotorkraft hinsichtlich Betrag und Richtung.
● Satelliten zur Bestimmung der Oberflächengeometrie des Ozeangebiets.
● GPS-Daten zur Bestimmung von Maschinenposition und/oder -bewegung.
● Gyroskope zur Bestimmung einer Drehrate.
● An der Oberfläche schwimmende Messkörper, wie z.B. Bojen (Auf- und Abbewegung, Taumelbewegung); dort können die Bewegungen ebenfalls mit (z.B. gyroskopisch aufgehängten) Beschleunigungssensoren in alle Raumrichtungen erfasst werden.

Aus diesen Sensorsignalen lassen sich die momentanen lokalen Anströmbedingungen der Kopplungskörper und/oder das Strömungsfeld um die Maschine und/oder das auf die Maschine/den Park aus mehreren Maschinen zulaufende Strömungsfeld und/oder die Eigenschwingungen der Maschine insbesondere prädiktiv ermitteln, so dass das zweite Bremsmoment und/oder die Anstellwinkel γ der Kopplungskörper 3 zur Erreichung der Steuer-/ Regelziele in geeigneter Weise eingestellt werden können. Dies kann insbesondere unter Verwendung der eingangs erläuterten HOS-Methode erfolgen.

Zu den Steuer-/Regelzielen gehören neben einer Optimierung des Rotor-Drehmoments insbesondere die Einhaltung einer Synchronizität und/oder die Vermeidung eines Strömungsabrisses an den Kopplungskörpern und/oder die Beeinflussung der Rotorkräfte zu einer Stabilisierung und/oder einer Verschiebung und/oder einer gezielten Schwingungsanregung und/oder einer Drehung der Anlage zur lagerichtigen Ausrichtung zur einlaufenden Welle. Ferner können über die Steuerung/Regelung mit einer Veränderung des mindestens einen Auftriebssystems auch die Tauchtiefe sowie auch das Abstützmoment beeinflusst werden. Über eine Anpassung des Dämpfungsplattenwiderstands kann das Maschinenschwingverhalten ebenfalls beeinflusst werden. Die Steuerung und Regelung erfolgt im Rahmen der Erfmdung vorteilhafterweise unter Berücksichtigung des vorherbestimmten Ergebnisgeschwindigkeitspotentials. Dabei wird im Rahmen dieser Anmeldung der Begriff der Synchronizität bereits als dann erfüllt gesehen, wenn der Rotor synchron mit dem Strömungsvektor mindestens einer Hauptkomponente der Welle rotiert.

Besonders vorteilhaft erscheinen dabei Messungen des Strömungsfeldes, die bereits vor der Maschine oder einem Park aus mehreren Maschinen erfolgen und aus denen das zu einem späteren Zeitpunkt an der/den Maschinen anliegende Strömungsfeld berechnet werden kann. Zusammen mit einem virtuellen Modell der Maschine kann daraus eine Vorsteuerung der Stellgrößen abgeleitet werden, die dann durch eine Regelung angepasst wird. Durch ein derartiges Vorgehen wird es insbesondere möglich, in multichromatischen Seegangszuständen die wesentlichen energietragenden Wellenanteile rechnerisch zu erfassen und die Steuerung/Regelung des Energiekonverters in geeigneter Weise auf diese abzustimmen.

Ist das Sensorsystem räumlich um die zu steuernden Anlage/dem Park von Anlagen angeordnet, so lässt sich nun durch geeignete Rechenmodelle die weitere Ausbreitung räumlich und zeitlich bestimmen, wodurch eine sehr gute Vorsteuerung der Anlage möglich ist. Dies gilt insbesondere für multichromatische Wellenzustände. Die Rekonstruktion des bestehenden Geschwindigkeitspotentials zu einem gegeben Zeitpunkt ("Ausgangsgeschwindigkeitspotential") geht als Anfangsbedingung in das Verfahren ein. Die Bestimmung des Ausgangsgeschwindigkeitspotentials selbst wird als Optimierungsproblem formuliert. Die in geeigneter Weise räumlich angeordneten Sensoren liefern eine Zeitreihe der Messgrößen, die als Eingangsdaten für das Optimierungsproblem dienen. Zur Rekonstruktion des Geschwindigkeitspotentials wird iterativ eine HOS-Berechnung mit dem Ziel durchlaufen, ein Geschwindigkeitspotential zu erzeugen, dessen Daten den Sensordaten möglichst genau entsprechen. Als Gütekriterium eignet sich beispielsweise eine RMS Methode, die die Abweichung der durch das rekonstruierte Wellenfeld erzeugten Daten mit den realen Messdaten vergleicht und zu einem Vergleichswert zusammenfasst, der in den Iterationsschritten minimiert werden soll. Da in der HOS-Berechnung neben Druckdaten auch Partikelgeschwindigkeiten und Wellenhöhen in der gesamten Fluiddomäne berechnet werden können, eignen sich prinzipiell alle der erwähnten Sensorarten für eine Rekonstruktion des Geschwindigkeitspotentials. Die Genauigkeit der Rekonstruktion ist für die Genauigkeit der zeitlichen Entwicklung des Geschwindigkeitspotentials von großer Bedeutung, da die Gleichungen, die das Geschwindigkeitspotential beschreiben, nichtlinear sind und daher empfindlich auf abweichende Anfangsbedingungen reagieren.

Es sollten Sensorarten gewählt werden, die ein geringes Rauschen aufweisen und möglichst stationär installiert sind (seabed mounted). Mögliche Bewegungen der Sensoren können in die Berechnung miteinbezogen werden, solange die Bewegung bekannt ist. Als Startpunkt des Iterationsschemas wird eine Rekonstruktion nach der linearen Wellentheorie angewendet. Abweichungen der Simulationsdaten von den Messdaten der Sensoren werden im zeitlichen Verlauf durch das Iterationsschema iterativ minimiert, indem in dem HOS-Verfahren sukzessive Terme höherer Ordnung in die Berechnung einbezogen werden, um den Nichtlinearitäten der Wellengleichung gerecht zu werden. Um eine hinreichend große Anzahl von Iterationen durchführen zu können, kann eine Parallelisierung der Rechenschritte hilfreich sein.

Die Sensoren können auch auf der eigentlichen Anlage angeordnet sein. Hierbei ist sowohl eine Anordnung auf dem Maschinengehäuse als auch eine Anordnung auf bewegten Teilen der Maschine möglich. In beiden Fällen ist zumindest bei Anlagen mit selbstreferenzierendem Gehäuse, das auf die Wellenbewegung antwortet, zusätzlich eine Erfassung der Gehäusebewegung zweckmäßig. Dies kann beispielsweise mit Hilfe von Beschleunigungs- oder anderen Sensoren erfolgen. Für diesen Fall ist vorzugsweise vorgesehen, aus den Messdaten des aktuellen Strömungsfeldes an der Maschine mit geeigneten Modellen eine Wellenprädiktion abzuleiten, mit der das Strömungsspektrum des nachfolgenden Zeitraums (beispielsweise für die nächsten 5-6 Sekunden) vorhergesagt werden kann. Auch mit dieser erfindungsgemäßen Ausprägung ist eine sehr gute Vorsteuerung des Maschinenverhaltens, auch in multichromatischen Gewässern, möglich.

## Patentansprüche

1. Verfahren zum Betreiben einer in einem wellenbewegten Gewässer befindlichen Maschine (1, 20), wobei basierend auf zu einem ersten, früheren Zeitpunkt ermittelten Messgrößen eine die zu einem zweiten, späteren Zeitpunkt zu erwartende Wellenbewegung kennzeichnende Größe berechnet wird,
wobei die Maschine unter Berücksichtigung der die zu dem zweiten, späteren Zeitpunkt zu erwartende Wellenbewegung kennzeichnenden Größe betrieben wird.

2. Verfahren nach Anspruche 1, wobei die die zu dem zweiten, späteren Zeitpunkt zu erwartende Wellenbewegung kennzeichnende Größe ein Geschwindigkeitsfeld oder ein Geschwindigkeitspotential ist.

3. Verfahren nach Anspruch 1 oder 2, wobei der Betrieb der Maschine (1, 20) unter Berücksichtigung der die zu dem zweiten, späteren Zeitpunkt zu erwartende Wellenbewegung kennzeichnenden Größe die Beeinflussung wenigstens einer Stellgröße der Maschine (1, 20) umfasst.

4. Verfahren nach Anspruch 3, wobei die Beeinflussung der wenigstens einen Stellgröße der Maschine (1, 20) eine Vorsteuerung der Stellgröße umfasst.

5. Verfahren nach einem der vorstehenden Ansprüche, wobei als Maschine ein Wellenenergiekonverter (1, 20) zur Umwandlung von Energie aus der Wellenbewegung in eine andere Energieform betrieben wird.

6. Verfahren nach einer Kombination des Anspruchs 5 mit einem der Ansprüche 3 oder 4, wobei die wenigstens eine Stellgröße ein elektrisches Generatormoment und/oder einen Anstellwinkel (γ₁, γ₂) wenigstens eines umströmten Kopplungskörpers (3) des Wellenenergiekonverters (1, 20) umfasst.

7. Verfahren nach Anspruch 5 oder 6, wobei der Betrieb des Wellenenergiekonverters (1, 20) die Regelung eines Phasenwinkels zwischen einer Rotationsbewegung eines Rotors des Wellenenergiekonverters (1, 20) und einer Orbitalströmung der Wellenbewegung umfasst.

8. Verfahren nach einem der vorstehenden Ansprüche, wobei der Betrieb ein Bewegen von Komponenten der Maschine in eine Schutzposition umfasst, wenn die die zu dem zweiten, späteren Zeitpunkt zu erwartende Wellenbewegung kennzeichnende Größe einen Schwellwert überschreitet.

9. Verfahren nach einem der vorstehenden Ansprüche, wobei basierend auf den zu einem ersten, früheren Zeitpunkt ermittelten Messgrößen ein Ausgangsgeschwindigkeitspotential oder -feld an einem ersten Ort bestimmt wird und ausgehend von dem Ausgangsgeschwindigkeitspotential oder - feld ein zu dem zweiten, späteren Zeitpunkt zu erwartendes Ergebnisgeschwindigkeitspotential oder - feld berechnet wird.

10. Verfahren nach Anspruch 9, wobei die Bestimmung des Ausgangsgeschwindigkeitspotentials oder -felds als Optimierungsproblem formuliert wird, in das die zu dem ersten, früheren Zeitpunkt ermittelten Messgrößen eingehen.

11. Recheneinheit, die dazu eingerichtet ist, ein Verfahren nach einem der vorstehenden Ansprüche durchzuführen.

12. Sensorsystem aufweisend zumindest einen Sensor (101 bis 110) sowie eine einer Recheneinheit nach Anspruch 11.

13. Wellenenergiekonverter (1, 20) zur Umwandlung von Energie aus einer Wellenbewegung eines Fluids in eine andere Energieform, mit wenigstens einem Rotor (2,3,4) und wenigstens einem mit dem wenigstens einen Rotor gekoppelten Energiewandler sowie einer Recheneinheit nach Anspruch 11.

14. Wellenenergiekonverter (1, 20) nach Anspruch 13, der zumindest einen Sensor (6) und/oder zumindest ein Sensorsystem (101 bis 110) zur Bestimmung einer Rotor- und/oder Kopplungskörperstellung und/oder eines Phasenwinkels zwischen einer Orbitalströmung und einer Rotationsbewegung des wenigstens einen Rotors und/oder eines Betriebszustands des Wellenenergiekonverters (1, 20) und/oder eines Wellenzustands, insbesondere einer Wellenhöhe, einer Wellenlänge, einer Wellenfrequenz, einer Wellenausbreitungsrichtung und/oder einer Wellenausbreitungsgeschwindigkeit, und/oder eines Strömungsfelds und/oder einer Anströmrichtung aufweist, wobei der zumindest eine Sensor und/oder das zumindest eine Sensorsystem an dem Wellenenergiekonverter (1, 20), in seiner Umgebung und/oder entfernt hiervon angeordnete Sensoren aufweist.
